# EUROPEAN PATENT APPLICATION

(11) **EP 1 091 237 A1**
(43) Date of publication of application: **11.04.2001**
(21) Application number: 99307840.1
(22) Date of filing: 05.10.1999
(51) Int. Cl.: G02F 1/1337

(54) **Liquid crystal device**

(71) Applicant: Hewlett-Packard Company, Palo Alto, California 94304-1112 (US)
(72) Inventor: Rudin, John Christopher, Knowle, Bristol BS4 2JE (GB); Kitson, Stephen, Thornbury, S. Gloucestershire BS35 2YA (GB)
(74) Representative: Lawrence, Richard Anthony

(57) **Abstract**

A liquid crystal device has and an alignment surface microstructure (104) on the inner surface of at least one wall (101), for aligning the director of the liquid crystal material (105). The orientation of the alignment structure (104) varies through substantially 360° within the area of a pixel so that the device has a wide viewing angle. The invention also provides a substrate for use in manufacturing the device, and a method of manufacturing the substrate.

## Description

The present invention relates to a liquid crystal device, notably to a display device, and to a substrate for use in manufacturing the device.

Hybrid Aligned Nematic (HAN), Vertically Aligned Nematic (VAN), Twisted nematic (TN) and super-twisted nematic (STN) cells are widely used as display devices in consumer and other products. The cells comprise a pair of opposed, spaced-apart translucent walls with nematic liquid crystal material between them. The walls have transparent electrode patterns that define pixels between them.

In TN and STN displays, the inner surface of each wall is treated to produce a unidirectional alignment of the nematic director, with the alignment directions being at 90° to each other. This arrangement causes the nematic director to describe a quarter helix within the TN cell, so that polarised light is guided through 90° when a pixel is in the 'field off' state. The 'field off' state may be either white or black, depending on whether the cell is viewed through crossed or parallel polarisers.

In a STN cell, the nematic liquid crystal is doped with a chiral additive to produce a helix of shorter pitch which turns the plane of polarised light through 90°. Applying a voltage across a pixel causes the nematic director to align normal to the walls in a homeotropic orientation, so that the plane of polarised light is not rotated through 90° in the 'field on' state.

A problem with all of these modes is that they have a non-uniform viewing angle hemisphere, which can lead to loss of contrast and image inversion.

There have been many previous attempts to improve the viewing angle of TN and STN systems. A number of schemes have been proposed to subdivide pixels into smaller domains, each having a different alignment direction to effect a broadening of the viewing hemisphere. These schemes are collectively known as `multi-domain' techniques. An example of such a technique is described in the paper entitled 'Four Domain TN-LCD Fabricated by Reverse Rubbing or Double Evaporation', J. Chen et al, Proc. SID `95, pp 865-868.

Liquid crystal (LC) alignment is typically effected by the unidirectional rubbing of a thin polyimide alignment layer on the interior of the LC cell, which gives rise to a unidirectional alignment with a small pretilt angle. If suitable masking is used, more than one domain can be rubbed, as outlined in the above reference. Whilst having a desirable effect on the optical characteristics of the device, the rubbing process is not ideal as this requires many process steps, and high tolerance control of the rubbing parameters is needed to give uniform display substrates. Moreover, rubbing may cause static and mechanical damage of active matrix elements which sit under the alignment layer.

An alternative (also outlined in the above reference) is to use patterned oblique evaporation of silicon oxide (SiO) to form the alignment layer. This also effects a desired optical response; however the process is complicated by the addition of two vacuum depositions and an additional lithography process.

Moreover, control of process parameters for SiO evaporation is critical to give uniformity, which is typically difficult to achieve over large areas.

A third alternative to generate multiple alignment domains is proposed in the paper entitled `TN-LCD with Quartered Subpixels Using Polarised UV-Light-Irradiated Polymer Orientation Films', T. Saitoh et al, Proc. SID `95, pp 877-880. This technique uses polymer orientation films whose subsequent alignment of an LC is dependent on their polymerisation in the presence of polarised UV illumination. Here, a polariser mask can be fabricated with a pattern of linear polarisation directions in small domains, and the resultant alignment surface gives the same pattern of alignment. However, this technique is limited to the production of a suitable polarisation mask, and requires careful control of the illumination parameters to achieve a uniform alignment.

It has also been proposed, in 'Axially Symmetric Aligned Microcell (ASM) Mode: Electro-Optical Characteristics of New Display Mode with Excellent Wide Viewing Angle', N. Yamada et al, Proc. SID `95, pp 575-578, to align the LC by means of polymer walls which span the cell and define microcells. The polymer walls are formed by phase separation of the LC and a polymerisable resin by UV-irradiation. This phase separation technique makes the display complex to manufacture, and the resulting cell walls are large alignment features which cause a significant degradation in optical throughput.

In a HAN cell, one wall is treated to align a nematic LC in a homogeneous alignment and the other wall is treated to induce a homeotropic alignment. The LC has positive dielectric anisotropy, and application of an electric field causes the LC directors to align normal to the walls so that the cell switches from a birefringent 'field off' state to a non-birefringent 'field on' state. The cell has no threshold voltage, so greyscale is possible, and switching voltages are low. However, the HAN display is highly angle dependent. In the VAN mode, a nematic LC of negative dielectric anisotropy is homeotropically aligned in the 'field off' state, and becomes birefringent in the 'field on' state. A dye may be used to enhance contrast. A problem with this display mode is that there is no well-defined 'field on' alignment, and switching speeds are slower than for the HAN mode.

According to an aspect of the present invention, there is provided a liquid crystal device as specified in claim 1.

The use of surface microstructures to align LCs has been known for many years, for example as described in 'The Alignment of Liquid Crystals by Grooved Surfaces', D. W. Berriman, Mol. Cryst. Liq. Cryst. 23 215-231 1973. This technique can provide a range of LC alignments, including planar monoalignment which is used in this invention, where the nematic director lies parallel to the groove direction and to the substrate inner surface, ie, planar. By varying the orientation of the surface microstructure through substantially 360° within the area of a pixel, a display may be formed which has a wide viewing angle and which is simple to manufacture.

The device may be a display device which is viewed between crossed or parallel polarisers, which may be affixed to the walls of the cell. Alternatively, or additionally, one or more pleochroic dyes may be added to the liquid crystal to enhance contrast.

The surface microstructure preferably comprises a plurality of adjacent regions, each of which has a pattern of concentric circles, ellipses, or squares, although other patterns of grooves may also be used. This effects a multidomain or continuously varying alignment direction to give a wide viewing angle display with a simple construction.

Accordingly, another aspect of the invention provides a liquid crystal display device as specified in claim 19.

The material surrounding the grooves is preferably no more than 50% of the thickness of the cell and may be much smaller, notably 0.1 to 1.5 µm high, limited only by the thickness of the cell. The spacing between concentric grooves is preferably from 0.1 to 2 µm, notably 0.5 to 1.5 µm.

The fabrication of the patterned alignment structure allows the effected alignment of the LC to vary continuously across the pixel, allowing the viewing characteristics to be optimised.

For circular patterned alignment the optical characteristics are axially symmetrical and insensitive to input polariser angle, affording a lower tolerance manufacturing process.

The fabrication of the patterned alignment microstructure can be photolithographic, embossed, or by other means compatible with large volume manufacturing processes.

The device may be used with active matrix, or passive matrix addressing.

The invention is also directed to a substrate for use in manufacturing a liquid crystal display device, as specified in claim 20, and to a method of manufacturing the substrate, as specified in claim 22.

The invention will now be further described, by way of example, with reference to the following drawing in which:
Figure 1 is a sectional view through a liquid crystal device in accordance with the present invention;
Figures 2 to 4 are plan views of surface microstructures on substrates suitable for use in the present invention; and
Figures 5 to 7 are views of the device of Figure 1 through crossed polarisers at magnifications of, respectively, 10X, 20X, and 50X.

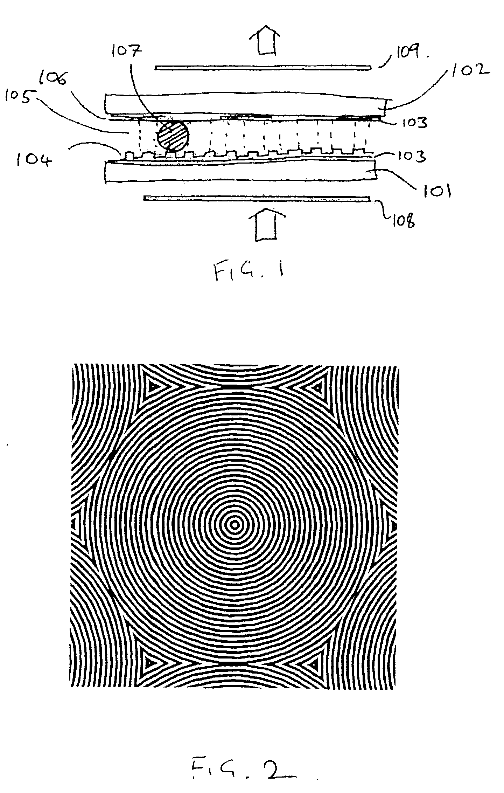

The liquid crystal cell shown in Figure 1 comprises a first transparent substrate 101 and a second, opposed, transparent substrate 102. The inner surface of both substrates is coated with indium tin oxide (ITO) 103, which is patterned to provide electrode structures, overlap of which defines pixels. The substrates 101, 102 are spaced apart by spacer means 107, in this example, beads. A nematic liquid crystal 105 is sandwiched between the substrates. The inner surface of the first substrate 101 is provided with a microstructural alignment pattern 104, fabricated in this example by photolithography, as will be described below. The structure 104 causes the LC 105 to adopt an alignment which is locally parallel and planar to the surface structure. On the inner surface of the second substrate 102 there is a coating 106 which induces a locally homeotropic alignment of the nematic director. The cell therefore adopts a 'Hybrid Aligned Mode'. The LC could optionally carry at least one pleochroic dye. In this HAN mode, light absorption by the dye would be substantially angle independent without the need for chiral doping which slows down switching times.

Alternatively, it would be possible for the second substrate 102 to be treated in the same manner as the first substrate 101, or for it to be treated by conventional means to induce a unidirectional planar anchoring. If the second surface is treated in the same manner as the first surface, with appropriate alignment of the structures and chiral doping, a 180° or 360° twist (for example) could be achieved. By treating the second substrate to induce a free planar anchoring, and chirally doping the nematic liquid crystal 105, the cell may be caused to adopt a TN or STN mode.

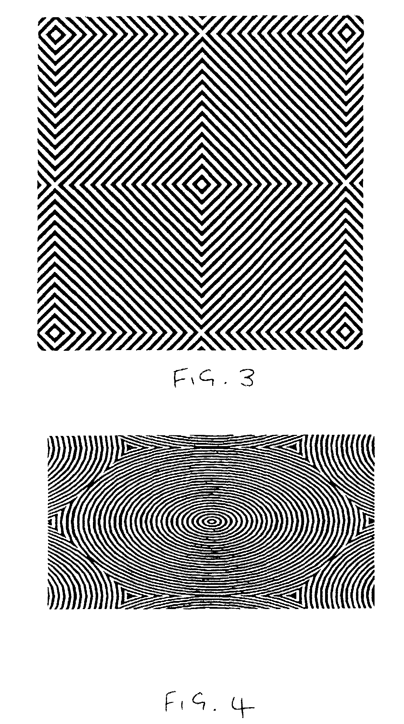

Ariel views of alternative alignment surfaces are given in Figures 2 to 4. The circular pattern shown in Figure 2 was used in the following example.

### Hybrid Aligned Cell

A clean glass substrate 101 coated with Indium Tin Oxide (ITO) 103 was taken and electrode patterns were form using normal lithographic and wet etch procedures. The substrate was spin-coated with a suitable photoresist (Shipley S1813) to a final thickness of 1.3 µm. A previously acquired photomask (Compugraphics International PLC) with a patterning of concentric circles of 0.8 µm line and 0.8 µm spacing, with a repeating pattern every ^{∼}100 µm in a hexagonal packed array, was brought into hard contact with the substrate and a suitable UV source was used to expose the photoresist for 10 s at ^{∼}100 mW/cm². The substrate was developed using Microposit Developer diluted 1:1 with deionised water for 20 s and rinsed dry. The substrate was flood exposed using a 365 nm UV source for 3 minutes at 30 mW/cm², and hardbaked at 85°C for 12 hours. The substrate 104 was then deep UV cured using a 254 nm UV source at ^{∼}50 mW/cm² for 1 hour.

A second clean ITO substrate 102 with electrode patterns 103 was taken and treated to give a homeotropic alignment of the liquid crystal using a stearyl-carboxy-chromium complex 106.

An LC test cell was formed by bring the substrates together using 10 µm spacer beads 107 (Micropearl SP210) contained in UV curing glue (Norland Optical Adhesives N73), and cured using 365 nm UV source. The cell was capillary filled with a standard nematic liquid crystal mixture (Merck ZLI 2293) with the addition of a surfactant (2% w/w Norland Optical Adhesives N65 cured in the isotropic and mass filtered). The cell was allowed to cool into the nematic phase and placed between crossed polarisers to determine the optical properties, both with and without electric fields between the ITO electrodes being present.

When the cell is placed between crossed polariser 108 and analyser 109, the 'field off' state is transmissive because of the net birefringence over the area of the circular features. Because of the distribution of the nematic directors, and thus optical axes, evenly over a 360° azimuthal range, the net birefringence is effectively constant regardless of viewing angle or input polariser angle. The 'field on' state has no on-axis birefringence and consequently light is extinguished at the analyser 109. The device may be used in both transmissive and reflective modes.

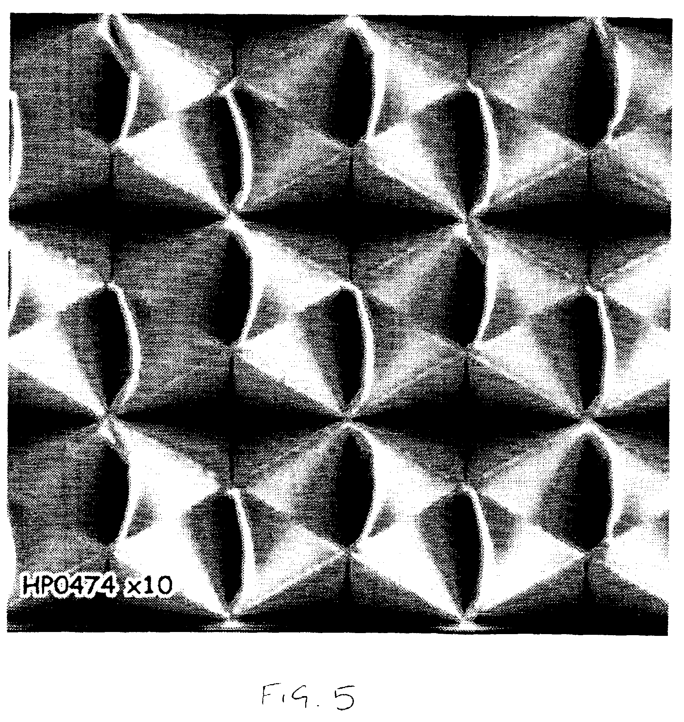

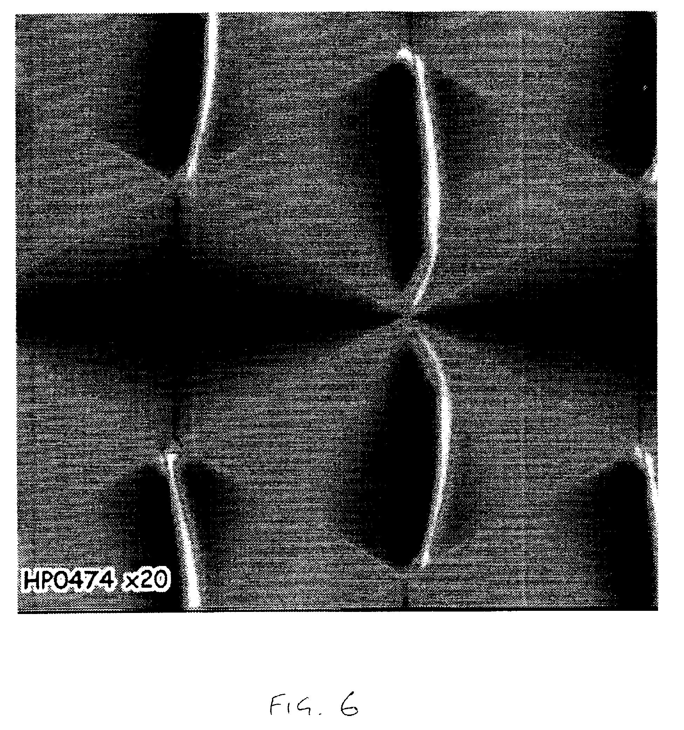

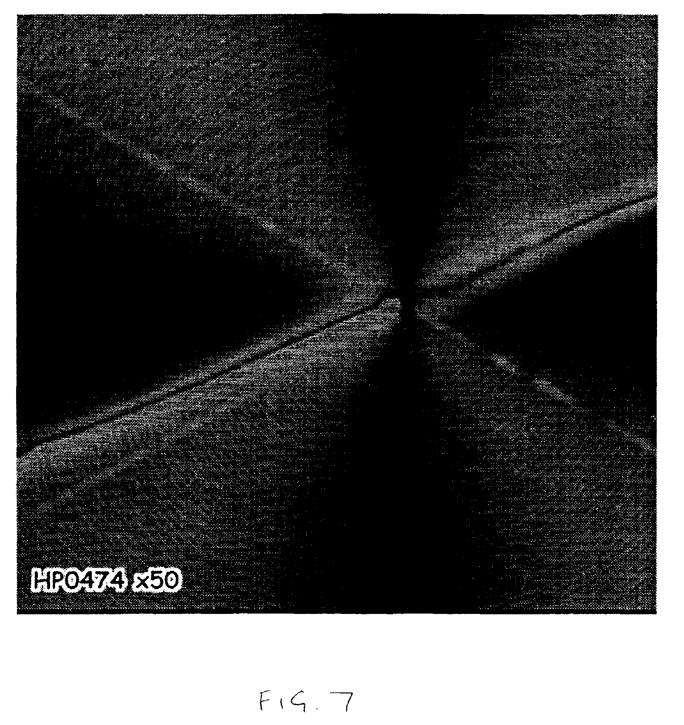

Images are of the cell between crossed polarisers 108, 109 at a variety of magnifications are shown in Figures 5 to 7. A 'cross' of low birefringence can clearly be seen where the alignment grooves are normal or orthogonal to the input polarisation direction. The experimental cells are not optimally thick, so the transmitted light is blue rather than white - thinner cells can readily be made with smaller spacers 107. The cell goes completely dark when a field is applied and viewed through crossed polarisers. This mode is suitable for simple passive or active matrix type panels.

In a second embodiment, the alignment pattern is square or diamond shaped (Figure 3), and the characteristics of this cell closely match those made by rubbed or UV polarised irradiation multidomain methods.

In a third embodiment, shown in Figure 4, the alignment pattern is elliptically-shaped. Instead of evening out the viewing cone uniformly, the alignment can be used to give a controlled non-uniform viewing cone as well, which may be desirable in some applications.

The invention provides liquid crystal device suitable for use as a display, which has a wide viewing angle and is of simple construction. The device is suitable for fabrication by a large volume manufacturing process.

## Claims

1. A liquid crystal device comprising a layer of a liquid crystal material (105) contained between first (101) and second (102) opposed spaced-apart translucent cell walls which carry electrode structures (103), overlapping regions of electrode structures (103) on opposed walls defining pixels, and an alignment surface microstructure (104) on the inner surface of at least the first wall (101), for aligning the director of the liquid crystal material (105); characterised in that the orientation of the alignment structure (104) varies through substantially 360° within the area of a pixel.

2. A device as claimed in claim 1, wherein the alignment structure (104) causes the local orientation of the liquid crystal director to vary continuously within the pixel.

3. A device as claimed in claim 1, wherein the surface microstructure (104) comprises a plurality of adjacent regions, each of which comprises a plurality of concentric grooves.

4. A device as claimed in claim 3, wherein the shape of the concentric grooves is substantially circular, elliptical, or square.

5. A device as claimed in claim 3, wherein the concentric grooves are substantially circular.

6. A device as claimed in any one of the preceding claims, wherein the surface microstructure (104) is formed by a photolithographic or embossing technique.

7. A device as claimed in any one of the preceding claims, wherein the surface microstructure (104) has a maximum height of 50% of the spacing between the cell walls.

8. A device as claimed in any one of the preceding claims, wherein the surface microstructure (104) has a height in the range 0.1 to 1.5 µm.

9. A device as claimed in claim 3, wherein adjacent grooves of the surface microstructure are separated by a gap of from 0.1 to 2 µm.

10. A device as claimed in claim 9, wherein the grooves are separated by a gap of from 0.5 to 1.5 µm.

11. A device as claimed in any one of the preceding claims, wherein the inner surface of the second cell wall (102) is treated to induce a local homeotropic alignment of the liquid crystal material (105).

12. A device as claimed in any one of claims 1 to 10, wherein the inner surface of the second cell wall 102) is treated to induce a local unidirectional planar anchoring of the liquid crystal material (105).

13. A device as claimed in any one of claims 1 to 10, wherein the inner surface of the second cell wall (102) carries a similar microstructure to that on the first cell wall (101).

14. A device as claimed in any one of claims 1 to 10, wherein the inner surface of the second cell wall (102) is treated to induce a free planar alignment.

15. A device as claimed in claim 14, wherein the liquid crystal material (105) is a nematic liquid crystal doped with a chiral additive which causes the cell to adopt a twisted nematic or supertwisted nematic mode.

16. A device as claimed in any one of the preceding claims, wherein the liquid crystal material has dissolved in it at least one pleochroic dye.

17. A device as claimed in any one of the preceding claims, wherein the electrode structures (103) of at least one cell wall (101, 102) comprise active semiconductor elements to effect an active switching matrix.

18. A device as claimed in any one of the preceding claims, wherein a polariser is affixed to the first 101 and second 102 cell walls.

19. A liquid crystal display device in which the inner surface of at least one wall is provided with an alignment structure comprising a plurality of adjacent regions each of which comprises a plurality of concentric grooves.

20. A substrate for use in manufacturing a liquid crystal display, comprising a translucent wall (101) with at least one electrode structure (103) on one surface thereof, and an alignment surface microstructure (104) for aligning the director of a liquid crystal material; characterised in that the alignment structure (104) comprises a plurality of adjacent regions, each of which comprises a plurality of concentric grooves wherein the orientation of the grooves varies through substantially 360°.

21. A substrate as claimed in claim 20, wherein the concentric grooves are substantially circular in shape.

22. A method of manufacturing a substrate according to claim 20, comprising applying a photoresist material to the surface of a translucent substrate which carries an electrode structure, exposing the applied photoresist material to a suitable light source through a mask which has a pattern of concentric openings, removing the unexposed photoresist, and hardening the exposed photoresist material.
